Europäisches Patentamt

European Patent Office

Office européen des brevets

(11) Publication number: **0 271 931 B1**

# EUROPEAN PATENT SPECIFICATION

(45) Date of publication of patent specification: **10.06.92**   (51) Int. Cl.5: **C09J 7/02, B32B 15/08**

(21) Application number: **87201998.9**

(22) Date of filing: **19.10.87**

(54) **Strip tape for a food product packaging container.**

(30) Priority: **16.12.86 JP 301111/86**

(43) Date of publication of application:
**22.06.88 Bulletin 88/25**

(45) Publication of the grant of the patent:
**10.06.92 Bulletin 92/24**

(84) Designated Contracting States:
**AT BE CH DE ES FR GB IT LI NL SE**

(56) References cited:
**US-A- 3 788 923**
**US-A- 4 363 841**

(73) Proprietor: **AB Tetra Pak**
**Rabyholms allé**
**Lund(SE)**

(72) Inventor: **Motichika Kobinata**
**84-16 Nagatsuka Gotenba-shi**
**Shizuoka(JP)**

(74) Representative: **Vollebregt, Cornelis Jacobus**
**et al**
**Algemeen Octrooibureau P.O. Box 645**
**NL-5600 AP Eindhoven(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

Strip tape for a food product packaging container being used for containing liquid food such as milk, juice, or the like, which intends to be airtight by sealing off the top and bottom open ends of a tube-shaped ply material A′ formed from a paper-based ply board blank by folding and overlapping its lengthwise and portions for welding to form a seam B.

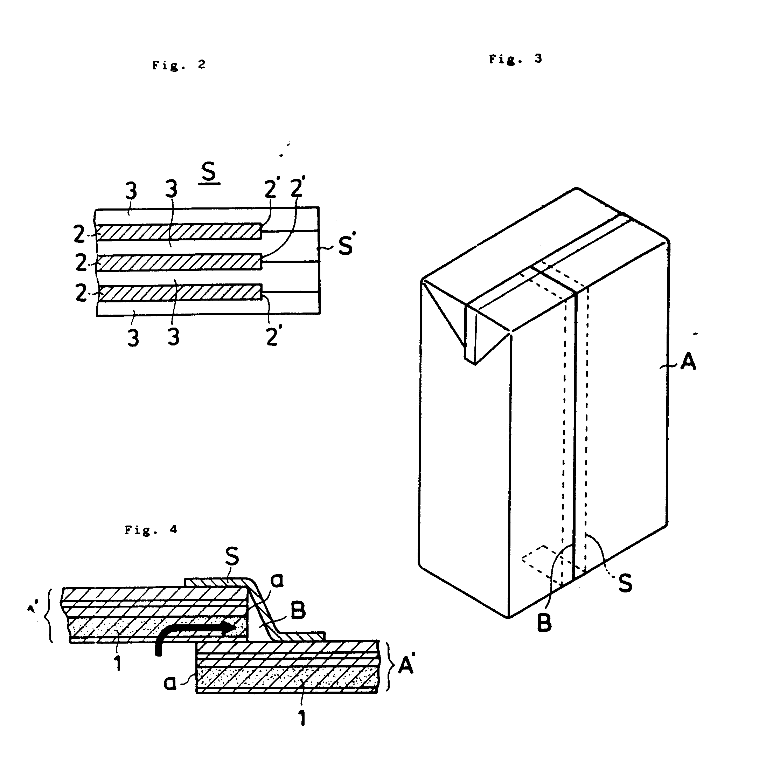

In such an airtight packaging container for food product having a seam B, as shown in Fig. 4, the lengthwise end surfaces a of the ply material A′ are exposed appartently along the seam B. It is recognized that such a condition may not satisfy the requirement of the food sanitation law which forbids the content to come into direct contact with any substance except polyethylene, by generally overlapping and welding the lengthwise end portions of the ply material A′.

It is known in the prior art to provide a strip tape S for attaching to the inner side of the seam B as shown in Fig. 4 (for example, disclosed in Japanse Patent Publication No. 56-14544).

It is an object of the prior art invention to protect a strip tape from deforming by heat. In the prior art, however, there is no explanation of a barrier protection against water, other gases, and more seriously, oxygen and light. Accordingly, in whatever manner the strip tape S is attached to the inner side of the seam B, oxygen and other substances may enter the airtight container A from its seam B. For example, although the food product packaging container A is airtight, oxygen may enter the container A trough a paper-made base layer 1, as represented by the arrow in Fig. 4, and moves inwardly across the strip tape S to come into direct contact with the food product contained in the container A. Because gas permeability, including oxygen, is greater in the strip tape S than in the ply material A′, the gas entered from the aforesaid seam B will always pass through the strip tape S to finally come into direct contact with the content of the container A. Consequently, when impurities enter the airtight container A, the food product in the container A will be deteriorated.

It is a first object of the present invention to eliminate this disadvantage and additionally, to comply with a condition of the aforesaid food sanitation law. The present invention is directed towards a strip tape which has a barrier protection against water, oxygen, other gases, or light, and also satisfies a condition of the aforesaid food sanitation law.

The present invention is disclosed, to accomplish the object, providing a strip tape which comprises a plurality of layers, the layers including at least a metal layer of which side edges arranged in a lengthwise direction remain inside so as not to reach the right and left ends of the strip tape arranged in a lengthwise direction. Said metal layer is placed inside between the other layers so as to be prevented from being exposed externally on both front and back side of the tape and additionally, from being exposed with its lengthwise side edges at the right and left ends of the tape arranged in a lengthwise direction.

Consequently, the strip tape S contains at least a metal layer which features a barrier protection against water, oxygen, other gases, or light, and additionally, which will be exposed neither on the front and back sides of the strip tape S nor at the right and left ends of the same arranged in a length direction.

It is noted that from US-A 3788923 is known a reinforcing composite trip comprising high density $SiO_2$ filled polyethylene having a metallic core completely embedded; this composite is stiff since exhibiting a high flexural modulus and reduced elongation.

Further from US-A 4363841 there is known a laminated packaging material of a multilayered polymeric material and a metal foil reaching the free ends of the laminate; bags are manufactured by flat welding a seam at the side of two blanks.

One embodiment of the present invention will be described in conjuction with the accompanying drawings.

Figs. 1 to 5 of the accompanying drawings illustrate one preferred embodiment of the present invention:

Fig. 1 is an enlarged plan view showing an extending portion omitted;

Fig. 2 is an enlarged cross-sectional view of a strip tape taken on the line 11-11 of Fig. 1;

Fig.3 is a perspective view showing a practice of the strip tape;

Fig. 4 is an enlarged cross-sectional view of a part of the practice;

Fig. 5 is a plan view showing a wide strip which includes a plurality of strip tapes of Fig. 1 communicated in right and left direction and also showing an extending portion thereof omitted; and

Fig. 6 is an enlarged corss-sectional view showing that the side edges of metal layers disposed internally are exposed at the side end of a strip tape; in which all parts are;

```
1.....base layer,      2......metal layer,     A......container,
A'.....ply material,    B......seam,            S....... strip tape.
```

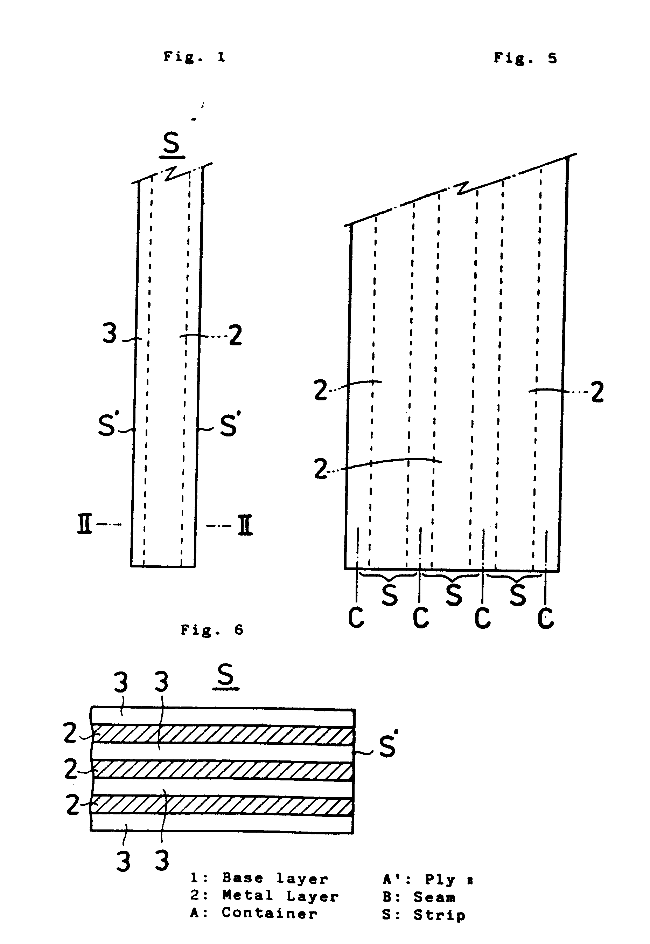

The strip tape S is a laminated strip having a plurality of layers as shown in Fig. 1. At least one of the layers 2 is made of metal, such as aluminium as a preference, whereas the other layers 3 are made of plastics preferably such as polyethylene. The metal layer 2, at least one included in the layers of the strip tape S, will provide an assured barrier protection against water, oxygen other gases, and light by preventing them from entering.

The metal layer 2 should be placed within the strip tape so as to be prevented from being on the external side of the layers. Accordingly, both the front and back sides of the metal layer 2 are covered with their respective layers 3. Therefor, the metal layer 2 will not be exposed on the front and back sides of the strip tape S. However, the side edges of the metal layer 2 will be exposed at the right and left sides S', S' of the strip tape S arranged in a lengthwise direction, as shown in Fig. 6, when the metal layer 2 is only placed between the other layers of the strip tape S. When the strip tape S is attached to the inner side of a seam B of a food product packaging container A formed from a paper-based ply material blank A' as shown in Figs. 3 and 4, the side edges of said metal layer 2 will come into direct contact with the food product contained in the container A, thus not satisfying a condition of the food sanitation law which forbids the content to come into contact with any substance except polyethylene. The side edges 2' of the metal layer 2 should then be arranged to remain inside so as not to reach the right and left ends S', S' of the strip tape S arranged in a lengthwise direction. In this manner, the metal layer 2 will not be exposed at the right and left ends S', S' of the strip tape S.

The metal layer 2, being formed as at least a layer to improve the barrier protection against water, oxygen, other gases, or light, will be exposed externally neither on the front and back sides of the strip tape S nor at the right and left ends S', S' of the strip tape S arranged in a lengthwise direction. While this strip tape S is attached to the inner side of the seam B of the food product packaging container A formed from a paper-based ply material blank A' as shown in Figs. 3 and 4, the metal layer 2, formed as a layer to improve the barrier protection, will not come into direct contact with the food product contained in the container A.

Although it will be understood that it could be suitable to provide a single metal layer 2 contained within the strip tape S, the embodied strip tape provides three metal layers, each being disposed on every non-metal layer. The metal layers can be increased or reduced properly. It will be understood to form the metal layer 2 by metallic deposition or foil laminating. To form the metal layer 2 by metallic deposition: each layer may be metallized entirely before removing unnecessary portions with solvent; a necessary portion of the layer may be metallized; or a process of etching may be employed.

This strip tape S may be manufactured one by one. Otherwise, a wide strip including a plurality of strip tapes S communicated in right and left directions can be formed as shown in Fig. 5 so as to separated afterward into pieces by cutting off on the cutting lines C arranged along the communicating zones, which will improve greatly the manufacturing efficiency.

While the strip tape S in accordance with the present invention, as being assured to provide a barrier protection against water, oxygen, other gases and light, is attached to the inner side of the seam B of a food product packaging container formed form a paper-based ply material blank, the advantage is such that the life of the food product preserved in the container will be extended. Additionally, the metal layer 2, which is contained within the strip tape S according to the present invention to improve its barrier protection against water, oxygen, other gases, and light, is exposed neither on the front and back sides of the strip tape S nor at the right and left sides S', S' of the strip tape S arranged in a lengthwise direction, whereby the improved strip tape S will satisfy a condition of the food sanitation law which forbids the content to come into contact with any substance except polyethylene and will provide no disadvantage as a sealing tape for food product packaging.

## Claims

1. A strip tape for a food product packaging container, as being attached to the inner side of a seam of said food product packaging container formed from a paper-based ply material blank so as to improve a barrier feature about the seam area, said tape comprising a plurality of layers which include at least a metal layer of which side edges arranged in a lengthwise direction remain interiorly so as not to reach the right and left ends of the strip tape arranged in a lengthwise direction.

**2.** A strip tape for a food product packaging container, as defined in Claim 1, wherein the aforesaid metal layer is formed by metallic deposition.

**3.** A strip tape for a food product packaging container, as defined in Claim 1, wherein the aforesaid metal layer is formed by metal foil laminating.

**4.** A strip tape for a food product packaging container, as defined in claim 1,2 or 3, wherein the aforesaid metal is aluminium.

**Revendications**

**1.** Bande pour un récipient de conditionnement d'un produit alimentaire, fixée du côté intérieur d'une ligne de jonction dudit récipient de conditionnement d'un produit alimentaire formé à partir d'une découpe d'un matériau en forme de nappe à base de papier de manière à améliorer une caractéristique d'étanchéité autour de la zone de jonction, ladite bande comprenant une pluralité de couches comportant au moins une couche métallique, dont les bords latéraux, qui s'étendent dans une direction longitudinale, restent à l'intérieur de manière à ne pas atteindre les extrémités de droite et de gauche de la bande, qui s'étendent dans une direction longitudinale.

**2.** Bande pour un récipient de conditionnement d'un produit alimentaire selon la revendication 1, dans laquelle la couche de métal mentionnée précédemment est formée au moyen d'un dépôt métallique.

**3.** Bande pour un récipient de conditionnement d'un produit alimentaire selon la revendication 1, dans laquelle la couche métallique mentionnée précédemment est formée par dépôt d'une feuille métallique.

**4.** Bande pour un récipient de conditionnement d'un produit alimentaire selon la revendication 1, 2 ou 3, dans laquelle le métal mentionné précédemment est de l'aluminium.

**Patentansprüche**

**1.** Bandstreifen für eine Lebensmittel-Verpackung zum Aufbringen auf die Innenseite einer Naht der aus einem Zuschnitt aus einem Schichtmaterial auf Papierbasis bestehenden Lebensmittel-Verpackung zum Verbessern der Dichtwirkung im Nahtbereich, bestehend aus einer Vielzahl von schichten, die zumindest eine Metallschicht einschließen, deren sich in Längsrichtung erstreckende Seitenkanten derart im Bandinnern angeordnet sind, daß sie nicht die sich in Längsrichtung erstreckenden, rechten und linken Enden des Bandstreifens erreichen.

**2.** Bandstreifen für eine Lebensmittel-Verpackung nach Anspruch 1, wobei die genannte Metallschicht durch Metallablagerung gebildet ist.

**3.** Bandstreifen für eine Lebensmittel-Verpackung nach Anspruch 1, wobei die genannte Metallschicht durch Metallfolienlaminieren gebildet ist.

**4.** Bandstreifen für eine Lebensmittel-Verpackung nach Anspruch 1, 2 oder 3, wobei das genannte Metall Aluminium ist.

Fig. 1

Fig. 5

Fig. 6

1: Base layer       A': Ply s
2: Metal Layer      B: Seam
A: Container        S: Strip

Fig. 2

Fig. 3

Fig. 4